# FASCICULE DE BREVET EUROPEEN

(11) **EP 0 551 783 B1**
(45) Date de publication et mention de la délivrance du brevet: **13.05.1998**
(21) Numéro de dépôt: 92403575.1
(22) Date de dépôt: 29.12.1992
(51) Int. Cl.: G01N 23/18, G01N 15/02, G21C 17/00, G01B 15/02

(54) **Procédé et dispositif de contrôle non destructif d'une paroi d'une capacité contenant un liquide radioactif**
Verfahren und Vorrichtung zur zerstörungsfreien Prüfung einer Wand eines mit einer radioaktiven Flüssigkeit gefüllten Behälters
Method and apparatus for non-destructive testing of the wall of a container filled with a radioactive liquid

(30) Priorité: 16.01.1992 FR 9200402
(43) Date de publication de la demande: 21.07.1993
(73) Titulaire: FRAMATOME, 92400 Courbevoie (FR)
(72) Inventeur: Maire, Daniel, F-69370 Saint Didier au Mont d'Or (FR); Moreau, Georges, F-01440 Viriat (FR); Archer, Jacques, F-92260 Chatenay-Malabry (FR)
(74) Mandataire: Bouget, Lucien

(56) Documents cités:
- EP-A- 0 075 517
- EP-A- 0 147 800
- US-A- 2 748 290
- US-A- 2 812 440
- US-A- 3 005 104
- US-A- 3 683 187

## Description

L'invention concerne un procédé et un dispositif de contrôle non destructif d'une paroi d'une capacité contenant un liquide radio-actif, et notamment, d'une cuve d'un réacteur nucléaire à neutrons rapides refroidi par du sodium liquide.

Les réacteurs nucléaires à neutrons rapides de type intégré comportent une cuve de très grandes dimensions appelée cuve principale qui renferme le liquide de refroidissement primaire du réacteur, généralement constitué par du sodium liquide dans lequel sont plongés le coeur et les structures internes du réacteur ainsi que la partie inférieure des composants du réacteur constitués par des échangeurs de chaleur et des pompes qui pénètrent dans la cuve au travers d'une dalle fermant la cuve à sa partie supérieure.

La cuve principale du réacteur comporte une paroi constituée par des tôles en acier inoxydable mises en forme et assemblées par soudage bout à bout suivant des lignes de soudure de grande longueur.

La cuve principale est disposée à l'intérieur d'une seconde cuve appelée cuve de sécurité, de manière à ménager avec la cuve de sécurité, un espace intercuve de largeur sensiblement constante.

Du fait de la présence de sodium liquide susceptible de s'enflammer spontanément au contact d'une atmosphère oxydante, la masse de sodium est entourée par une atmosphère de gaz neutre, constituée généralement par de l'argon qui remplit en particulier l'espace intercuve.

Bien que la fabrication de la cuve du réacteur nucléaire fasse l'objet de précautions toutes particulières et s'accompagne de nombreux contrôles à tous les stades de l'élaboration, la cuve peut comporter certains défauts qui ne portent pas atteinte à la sécurité du fait que la probabilité d'évolution de ces défauts est pratiquement nulle. De plus, ces défauts tels qu'un manque d'épaisseur local d'une tôle constituant une partie de la paroi de la cuve ou un manque de compacité d'une soudure, sont connus pour avoir été détectés et acceptés lors de la fabrication.

Pour détecter une évolution hautement improbable de ces défauts après un certain temps de fonctionnement du réacteur, on effectue un contrôle non destructif des zones correspondantes de la paroi, à intervalles réguliers, pendant les arrêts du réacteur nucléaire.

En outre, certains défauts tels que des fissures peuvent apparaître dans la paroi de la cuve, pendant le fonctionnement du réacteur, il est bien sûr nécessaire de détecter ces défauts, le plus rapidement possible après leur apparition.

On connaît des techniques diverses de contrôle non destructif telles que la radiographie, la magnétoscopie, le ressuage et les méthodes de contrôle par ultrasons ou par courants de Foucault qui peuvent être utilisées pour contrôler l'état qualitatif et l'intégrité d'un élément d'un ensemble industriel tel qu'un réacteur nucléaire.

Cependant, l'utilisation de tels procédés peut s'avérer difficile sinon impossible, pour effectuer le contrôle de la paroi de la cuve principale d'un réacteur nucléaire à neutrons rapides. En effet, on ne peut avoir accès à l'intérieur de la cuve, même pendant les périodes d'arrêt du réacteur, puisque cette cuve contient le coeur du réacteur qui présente une très forte activité et qu'elle est remplie de métal liquide chaud et radioactif.

L'inspection de la paroi de la cuve principale, après la mise en service du réacteur, ne peut se faire que par l'extérieur de la cuve, l'intervention devant être commandée à distance du fait de la présence d'une atmosphère de gaz neutre autour de la cuve, de la température élevée de la cuve qui renferme du sodium liquide chaud, même pendant les périodes d'arrêt du réacteur et de rayonnements gamma intenses.

On a proposé, pour réaliser l'inspection en service de la paroi de la cuve principale d'un réacteur nucléaire à neutrons rapides, de déplacer les moyens d'inspection dans l'espace intercuve, au voisinage de la surface externe de la cuve principale, en utilisant un chariot articulé dont les déplacements sont commandés à distance. Cependant, on ne connaît pas de moyens d'inspection qui peuvent être associés au chariot mobile pour effectuer de manière simple le contrôle d'une zone quelconque ou de l'ensemble de la cuve principale du réacteur nucléaire.

On connaît des procédés de contrôle non destructif utilisant des rayons gamma, c'est-à-dire des flux de photons d'une certaine énergie émis par une substance radioactive, sous forme d'une source ponctuelle.

Les photons sont suceptibles de traverser une certaine épaisseur d'un matériau à contrôler et le flux de photons traversant le matériau est modifié par la présence de défauts. En effectuant un comptage ou une mesure de flux de photons après la traversée du matériau, on peut détecter la présence éventuelle de défauts dans le matériau.

Dans le cas du contrôle d'une paroi, il est nécessaire de disposer de part et d'autre de cette paroi, un émetteur de rayons gamma et un détecteur de photons, dans des positions correspondantes. Un tel procédé n'est donc pas applicable dans le cas d'une cuve principale d'un réacteur nucléaire à neutrons rapides, puisqu'il n'est pas possible de placer un moyen de contrôle à l'intérieur de la cuve.

Dans le cas d'une cuve d'un réacteur nucléaire à eau sous pression également, il n'est pas possible d'accèder au volume intérieur de la cuve pendant le fonctionnement du réacteur, de sorte qu'on ne peut effectuer une inspection de la paroi de la cuve en service, en utilisant les rayons gamma émis par une source ponctuelle, selon les procédés de l'art antérieur.

Dans le cas des réacteurs nucléaires comportant une cuve contenant un liquide de refroidissement du réacteur dans lequel est plongé le coeur, le liquide de refroidissement peut être activé pendant le fonctionnement du réacteur, par exemple sous l'effet du bombardement neutronique.

Dans le cas où le liquide de refroidissement est du sodium, le bombardement neutronique provenant du coeur entraîne la formation de deux isotopes radioactifs du sodium, à savoir le sodium 22 et le sodium 24. Ces deux éléments qui sont répartis dans toute la masse du sodium liquide remplissant la cuve sont des émetteurs de rayons gamma.

Dans le cas d'un réacteur nucléaire refroidi par de l'eau sous pression, il se produit, pendant le fonctionnement du réacteur, des réactions nucléaires qui entraînent la formation d'azote 16 radioactif réparti dans toute la masse de l'eau primaire remplissant la cuve. L'azote 16 formé en continu dans la cuve du réacteur en fonctionnement émet des rayons gamma, du fait de sa radioactivité.

De manière plus générale, on utilise dans l'industrie nucléaire, des récipients ou capacités destinés à contenir des liquides renfermant un ou plusieurs éléments radioactifs émetteurs de rayons gamma répartis dans la masse du liquide contenu dans la capacité.

Jusqu'ici on n'a jamais utilisé un élément radioactif contenu et réparti dans la masse d'un liquide renfermé par une capacité, pour effectuer le contrôle non destructif de la paroi de la capacité.

Le but de l'invention est donc de proposer un procédé de contrôle non destructif d'une paroi d'une capacité contenant un liquide dans lequel au moins un élément radioactif émettant un rayonnement gamma est réparti de manière sensiblement uniforme, consistant à effectuer un comptage de photons au voisinage de la surface externe d'une zone de mesure de la paroi et à comparer le nombre de photons déterminé par comptage à un nombre référence de photons, pour en déduire si un défaut est présent ou non dans la zone de mesure de la paroi, qui permette d'effectuer la détection de défauts éventuels dans la paroi, de manière simple, sans introduire de dispositif de contrôle à l'intérieur de la capacité et de façon extrêmement sûre.

Dans ce but, on effectue le comptage des photons émis par l'élément radioactif réparti de manière uniforme dans le liquide et transmis à travers la zone de mesure de la paroi pouvant présenter des défauts et le nombre de référence est le nombre de photons émis par l'élément radio-actif transmis à travers une zone saine de référence de la paroi ne comportant pas de défauts. Afin de bien faire comprendre l'invention, on va maintenant décrire, à titre d'exemple non limitatif, un procédé de contrôle non destructif de la paroi de la cuve principale d'un réacteur nucléaire à neutrons rapides refroidi par du sodium liquide.

La figure 1 est une vue en coupe par un plan vertical d'un réacteur nucléaire à neutrons rapides refroidi par du sodium liquide.

La figure 2 est une vue en coupe d'un dispositif permettant la mise en oeuvre d'un procédé de contrôle suivant l'invention de la paroi de la cuve principale du réacteur nucléaire.

La figure 3 est une vue frontale suivant 3-3 de la figure 2 d'un dispositif de collimation de rayons gamma utilisé pour la mise en oeuvre du procédé suivant l'invention.

Les figures 4a, 4b, 4c et 4d sont des vues analogues à la vue de la figure 3 montrant quatre variantes de réalisation d'un dispositif de collimation des rayons gamma.

La figure 5 est une vue développée d'une zone de soudure de la paroi de la cuve du réacteur nucléaire.

La figure 6 est une vue en coupe schématique d'un dispositif de contrôle suivant l'invention et à titre comparatif d'un dispositif de contrôle par rayons gamma suivant l'art antérieur.

La figure 7 est une vue en coupe par un plan vertical d'un dispositif permettant de déplacer un détecteur de photons dans l'espace intercuve d'un réacteur nucléaire pour effectuer le contrôle suivant l'invention.

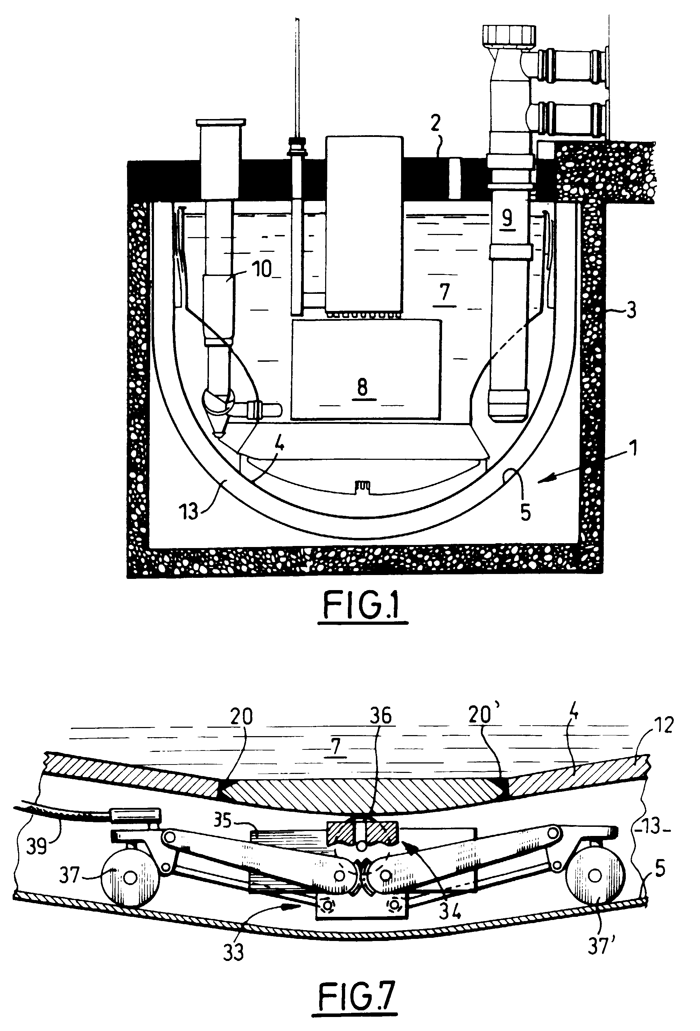

Sur la figure 1, on voit un réacteur nucléaire à neutrons rapides refroidi par du sodium liquide, de type intégré. Le réacteur nucléaire comporte une cuve de grandes dimensions désignée de manière générale par le repère 1 suspendue à une dalle 2 fermant la cuve 1 à sa partie supérieure et reposant sur la structure en béton 3 du réacteur.

La cuve 1 est constituée de deux enveloppes en acier inoxydable 4 et 5 disposées l'une à l'intérieur de l'autre avec un certain espacement.

L'enveloppe interne 4 constitue la cuve principale du réacteur nucléaire et l'enveloppe externe 5 la cuve de sécurité.

La cuve principale 4 renferme une masse de sodium liquide 7 dans laquelle est plongé le coeur 8 du réacteur constitué par des assemblages combustibles juxtaposés.

La cuve 4 renferme diverses structures internes assurant le support du coeur et la séparation du volume interne de la cuve en différentes zones destinées à recevoir du sodium liquide à des températures différentes.

La circulation du sodium liquide contenu dans la cuve entre les différentes zones se produit en particulier à l'intérieur d'échangeurs de chaleur intermédiaires tels que 9 et grâce à des pompes telles que 10.

Du sodium liquide refroidi à l'intérieur des échangeurs intermédiaires 9 est injecté par les pompes 10 à la base du coeur, de manière à assurer le refroidissement des assemblages combustibles du coeur 8. Le sodium chaud sortant du coeur 8 à sa partie supérieure, dans le collecteur chaud du réacteur nucléaire, pénètre dans les échangeurs de chaleur intermédiaires 9 dans lesquels il assure l'échauffement de sodium liquide secondaire et se refroidit avant de ressortir dans le collecteur froid du réacteur.

Le sodium secondaire échauffé dans les échangeurs de chaleur intermédiaires 9 est utilisé pour la production de vapeur dans des générateurs de vapeur, à l'extérieur de la cuve 1.

Le sodium liquide en circulation à l'intérieur de la cuve principale 4 du réacteur est soumis à un rayonnement intense à l'intérieur du coeur et en particulier à un bombardement neutronique par les neutrons rapides produits par le coeur.

Sous l'effet du rayonnement, il se forme à l'intérieur du sodium utilisé comme liquide de refroidissement dans la cuve, des isotopes radioactifs tels que le sodium 22 (Na22) et le sodium 24 (Na24), par réaction nucléaire.

Après un certain temps de fonctionnement du réacteur, le sodium de refroidissement à l'intérieur de la cuve présente donc une radioactivité importante, en particulier du fait de la présence d'éléments radioactifs tels que le Na22 et le Na24 répartis dans toute la masse du sodium.

Le Na22 et le Na 24 émettent des photons avec une certaine énergie correspondant au domaine des rayons gamma.

La période du Na22 est de 2,6 ans et celle du Na24 de 15 heures.

Après l'arrêt du réacteur nucléaire, il se produit donc une certaine décroissance de la radioactivité du sodium au cours du temps et en particulier de l'activité des éléments radioactifs Na22 et Na24.

L'activité spécifique du Na24 est sensiblement plus élevée que l'activité spécifique du Na22.

Dans le cadre de l'invention, on a pensé à utiliser les rayons gamma émis par les éléments radioactifs répartis uniformément dans le sodium remplissant la cuve principale 4, pour réaliser le contrôle de la paroi de cette cuve principale 4.

Dans le cadre d'une telle utilisation comme source de rayons gamma pour réaliser le contrôle d'une paroi, seul le Na24 possède une activité suffisante pour que le contrôle soit effectué dans des conditions satisfaisantes.

En revanche, du fait de sa période relativement courte, la décroissance de l'activité de cet élément pendant le contrôle est tout-à-fait sensible.

Comme il sera expliqué plus loin, le procédé de contrôle suivant l'invention est mis en oeuvre pour tenir compte de cette décroissance au cours du temps.

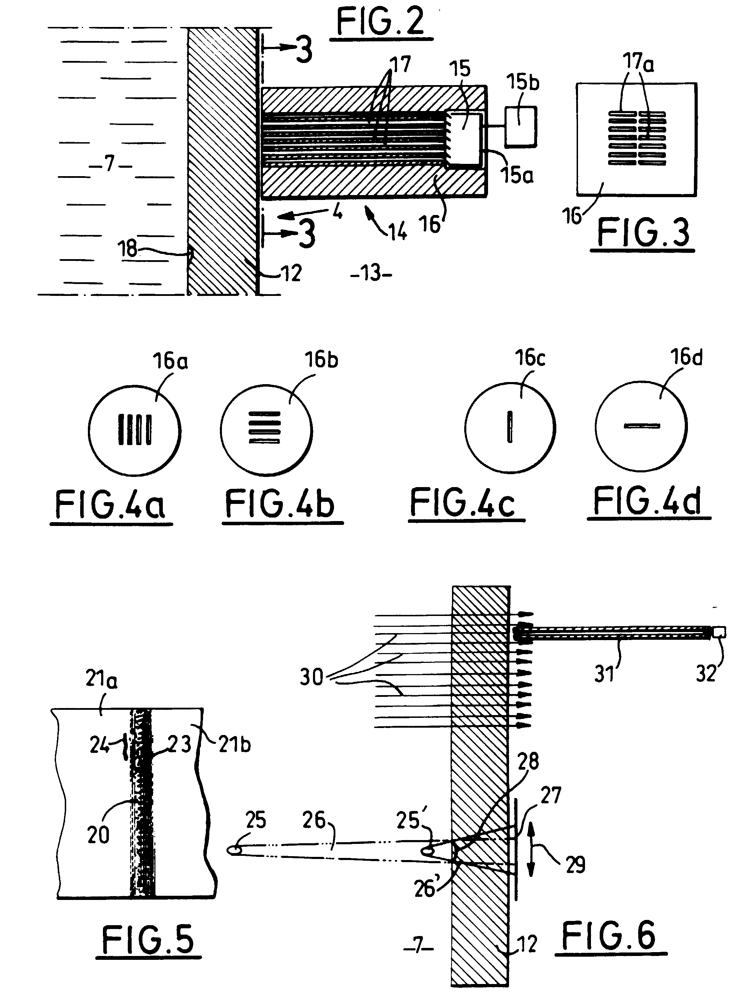

Sur les figures 2 et 3, on a représenté un dispositif permettant de mettre en oeuvre le procédé suivant l'invention pour effectuer le contrôle de la paroi 12 de la cuve principale 4 du réacteur nucléaire renfermant, après un certain temps de fonctionnement du réacteur, une masse 7 de sodium liquide radioactif renfermant en particulier du sodium 24.

Le contrôle est effectué après arrêt du réacteur nucléaire, c'est-à-dire après engagement des barres de contrôle dans leur position d'insertion maximale à l'intérieur du coeur 8 et après une période d'une durée qui peut être de l'ordre de 35 heures après l'arrêt du réacteur pendant laquelle l'activité du coeur du réacteur décroît de manière sensible.

De cette façon, on évite d'exposer le dispositif utilisé pour le contrôle à des radiations trop intenses pour que les matériaux constituant ce dispositif puissent résister pendant la durée d'exposition.

On évite également de ce fait, une interférence trop importante des rayonnements provenant directement du coeur avec les rayonnements provenant de la masse de sodium de refroidissement, qui rendrait les mesures difficilement exploitables.

Comme il est visible sur la figure 2, le dispositif 14 utilisé pour le contrôle est introduit à l'intérieur de l'espace intercuve 13 ménagé entre la paroi 12 de la cuve principale 4 et la cuve de sécurité 5.

Le dispositif 14 comporte un détecteur de photons 15 comprenant une surface sensible 15a reliée par un conducteur à un module électronique de traitement 15b et un collimateur 16 en plomb ou en alliage lourd à base de plomb comportant des fenêtres et des canaux de collimation 17 placés dans l'alignement de la surface sensible 15a du détecteur de photons 15.

Comme il est visible sur les figures 2 et 3, le collimateur 16 peut être constitué par un bloc de plomb ou d'alliage lourd de forme globalement parallélépipédique comportant un logement pour le détecteur de photons 15 à l'une de ses extrémités et des canaux 17 percés suivant sa direction longitudinale, les canaux 17 ayant en section transversale la forme de fentes qui constituent les fenêtres 17a du collimateur, comme visible sur la figure 3.

Dans le mode de réalisation représenté sur les figures 2 et 3, les fenêtres 17a constituant les parties d'entrée des canaux 17 au voisinage de la paroi 12 sont disposées suivant deux rangées parallèles l'une à l'autre.

Les rayons gamma constitués par des photons ayant une certaine énergie sont dirigés depuis la masse de sodium radioactif 7 dans laquelle est réparti l'émetteur gamma constitué par du sodium 24 jusqu'à la surface sensible du détecteur 15, à travers la paroi 12 et les canaux 17 du collimateur 16.

On effectue successivement le contrôle de zones de mesure de la paroi dont la section correspond à la section de la partie d'entrée du collimateur, c'est-à-dire à la section de la pièce en plomb ou en alliage lourd traversée par les canaux 17.

Dans le cas où la zone de la paroi 12 située en vis-à-vis du dispositif de contrôle 14 est totalement saine et ne présente aucun défaut, le nombre de photons émis par le sodium 7, à travers la zone de mesure de la paroi, pendant un intervalle de temps donné, ne dépend que de l'activité de l'élément radioactif, c'est-à-dire du sodium 24 contenu par la masse de sodium 7.

En revanche, dans le cas de la présence d'un défaut tel que 18 constitué par exemple par une fissure, dans la paroi 12, le nombre de photons émis à travers la paroi 12 par l'élément radioactif contenu dans le sodium 7 est différent de ce qu'il serait dans le cas de la traversée d'une zone saine de la paroi.

En comparant le nombre de photons émis à travers une zone de référence et à travers la zone de mesure, on peut déterminer si la paroi présente au moins un défaut dans la zone de mesure.

Généralement, le nombre de photons émis à travers une zone présentant des défauts tels que des fissures est supérieur au nombre de photons émis à travers une zone saine de la paroi.

On peut envisager divers types de traitement qui peuvent être mis en oeuvre en utilisant un module électronique adapté.

Dans une premier type de traitement, on peut effectuer le comptage des photons parvenant au détecteur 15, jusqu'à atteindre un certain nombre de photons et mesurer le temps nécessaire pour l'émission et le comptage de ce nombre prédéterminé de photons.

Dans le cas où le comptage est effectué en face d'une zone saine de la paroi 12 ne comportant pas de défaut, le temps de comptage jusqu'à atteindre un nombre prédéterminé de photons ne dépend que de l'activité du sodium 24 dans la masse de sodium liquide 7, c'est-à-dire du temps qui s'est écoulé depuis la fin de la période de décroissance après l'arrêt du réacteur.

On a procédé préalablement à un étalonnage pour définir la relation entre le temps nécessaire pour le comptage du nombre prédéterminé de photons et le temps qui s'est écoulé depuis la fin de la période de décroissance de l'activité.

Dans le cas où l'on détecte une différence entre le temps ainsi défini en fonction de la période de mesure et le temps nécessaire pour le comptage, on en déduit la présence d'un défaut dans la paroi.

Généralement le temps de comptage est alors inférieur au temps défini par la relation.

Dans le cas d'un réacteur nucléaire à neutrons rapides et d'un comptage effectué par un détecteur de photons dans l'espace intercuve après une période de décroissance de 35 heures suivant l'arrêt du réacteur, l'activité du sodium 24 est diminuée de moitié dans une période de 15 heures.

Il a été possible d'effectuer un comptage d'un nombre de photons représentatif et utilisable pour la détection pendant une durée d'une seconde au début de la période de mesure, cette durée passant à deux secondes après une durée de 15 heures.

Au cours de la période de 15 heures, la durée normale de comptage du nombre de photons prédéterminé, c'est-à-dire la durée de comptage du nombre de photons prédéterminé à travers une zone saine de la paroi varie de manière sensiblement linéaire entre une seconde et deux secondes.

On peut ainsi, pour une mesure effectuée à un moment quelconque pendant une durée de 15 heures suivant la période de désactivation, déterminer si la durée de comptage du nombre de photons défini correspond à une zone saine ou à une zone présentant des défauts.

Le procédé suivant l'invention pourrait être mis en oeuvre d'une seconde manière en utilisant deux dispositifs de mesure identiques tels que le dispositif 14, l'un de ces dispositifs se déplaçant dans une zone de mesure susceptible de présenter des défauts et l'autre dispositif de mesure se déplaçant dans une zone saine de la paroi.

Dans le cas du contrôle d'un cordon de soudure 20 entre deux tôles 21a et 21b en acier inoxydable constituant une partie de la paroi 12 de la cuve du réacteur nucléaire, l'un des dispositifs de mesure 14 est déplacé suivant le cordon de soudure 20 de manière à couvrir la largeur de ce cordon de soudure et deux bandes latérales de faible largeur de part et d'autre du cordon de soudure et l'autre dispositif de mesure tel que le dispositif 14 est déplacé simultanément dans une zone d'une des tôles 21a ou 21b éloignée du cordon de soudure 20.

On enregistre une différence du nombre de photons compté par les deux dispositifs de mesure 14, dans le cas où un défaut 23 est présent à l'intérieur du cordon de soudure 20 ou dans le cas où un défaut tel qu'une fissure 24 est présent dans l'une des tôles, au voisinage du cordon de soudure 20, les défauts 23 et 24 étant formés au moment de la soudure des tôles.

On a pu effectuer, grâce au procédé de l'invention, le contrôle de soudures bout à bout de tôles d'acier de 25 mm d'épaisseur constituant des parties de la paroi d'une cuve de réacteur nucléaire à neutrons rapides, de manière à déceler des défauts dont les caractéristiques moyennes sont les suivantes :
largeur : 0,1 mm
longeur : 20 mm
profondeur (à l'intérieur du cordon de soudure ou de la tôle) : 5 mm.

Le comptage des photons traversant la zone de mesure susceptible de présenter des défauts et la comparaison du nombre obtenu à un nombre de référence permet également de déterminer le volume relatif du défaut dans la zone de mesure.

Ce contrôle a pu être effectué de manière satisfaisante, en utilisant les rayons gamma émis par le sodium 24 réparti dans la masse de sodium contenu par la cuve, le temps de comptage étant compris généralement entre une et deux secondes. Il est ainsi possible d'effectuer un balayage des zones de la cuve à surveiller en plaçant le dispositif de détection et de comptage dans des zones successives de mesure, pendant une durée comprise entre une et deux secondes.

Afin d'effectuer le contrôle de l'ensemble des zones de soudure de la cuve ou de l'ensemble de la paroi, il est possible d'utiliser simultanément un nombre adapté de dispositifs de mesure dans différentes zones de la cuve.

En fonction de la forme et de la dimension des zones de la cuve à contrôler, il est possible d'utiliser des collimateurs de formes différentes et par exemple des collimateurs constitués par des pièces massives cylindriques à section circulaire en plomb ou en alliage de plomb, par exemple l'alliage **DENAL**, telles que visibles sur les figures 4a, 4b, 46 et 4d.

Le collimateur 16a représenté sur la figure 4a comporte quatre fenêtres en forme de fentes disposées dans la direction verticale.

Le collimateur 16b représenté sur la figure 4b comporte quatre fenêtres en forme de fentes disposées horizontalement et placées l'une au-dessus de l'autre.

Le collimateur 16c représenté sur la figure 4c comporte une seule fenêtre constituée par une fente verticale alors que le collimateur 16d représenté sur la figure 4d comporte une seule fenêtre constituée par une fente dans la direction horizontale.

Le détecteur de photons ne doit être sensible qu'aux rayonnements provenant directement du sodium 7 à travers la paroi 12 et non pas aux rayonnements ayant une autre source et par exemple aux rayonnements diffusés dans l'épaisseur de la paroi.

Il est donc nécessaire de réaliser un filtrage au moyen d'un spectromètre gamma associé à l'ensemble d'exploitation et de mesure et d'utiliser un collimateur en plomb ou en alliage lourd à l'extrémité de sortie duquel est placée la surface sensible du détecteur de photons.

Sur la figure 6, on a représenté, de manière schématique et comparative, des moyens de détection par gammagraphie suivant l'invention dans la partie supérieure de la figure et suivant l'art antérieur, dans la partie inférieure de la figure.

Dans le cas des dispositifs suivant l'art antérieur, on utilisait une source de rayons gamma 25 ou 25' de faible dimension (quelques millimètres) qui pouvait être considérée comme ponctuelle. La source 25 ou 25' émet un faisceau de photons 26 ou 26' en direction d'un film ou de la surface sensible d'un détecteur 27.

Comme il est visible sur la figure, il est nécessaire, pour détecter avec le plus de netteté possible un défaut 28 dans la paroi 12, de placer la source de rayons gamma, le plus loin possible de la surface interne de la paroi 12, de manière à diminuer l'étendue de la zone de la surface sensible recevant l'émission de photons (zone 29).

La position 25 de la source gamma est donc préférable à la position de la source 25', dans la mesure où l'étendue de la zone 29 correspondant au défaut 28 est beaucoup moins étalée sous la forme d'un flou géométrique dans le cas de la source éloignée 25.

Du fait que la source gamma 25 ou 25' et la surface sensible 27 doivent être placées de part et d'autre de la paroi 12, le procédé suivant l'art antérieur ne peut être utilisé pour le contrôle de la paroi de la cuve principale d'un réacteur nucléaire à neutrons rapides.

Dans le cas d'un rayonnement gamma émis par du sodium 24 réparti dans la masse de sodium 7 contenu par la paroi 12, le rayonnement traverse de manière sensiblement uniforme toutes les zones de la paroi, comme schématisé par les faisceaux de rayons gamma parallèles 30.

En utilisant un collimateur 31 dont la longueur est sensiblement équivalente à la distance de la source 25 à la paroi 12, on obtient, sur la surface sensible du détecteur 32, une définition du défaut équivalente à celle obtenue par une source ponctuelle de rayons gamma éloignée de la paroi 12 telle que la source 25.

Ce résultat est obtenu grâce à un ensemble collimateur-détecteur disposé d'un seul côté de la paroi 12.

Dans le cas d'une capacité contenant un liquide radioactif telle qu'une cuve de réacteur nucléaire, il est donc possible d'effectuer une détection précise des défauts de la paroi de la capacité, en plaçant un détecteur dans des zones successives de mesure à l'extérieur de la paroi et en utilisant un collimateur.

Il est bien sûr nécessaire que le liquide radioactif contenu dans la capacité renferme un élément radioactif émetteur de rayons gamma et présentant une activité suffisante, uniformément réparti dans la masse du liquide.

Dans le cas du contrôle de la cuve principale d'un réacteur nucléaire à neutrons rapides refroidi par du sodium liquide, il est possible d'utiliser, comme représenté sur la figure 7, un chariot 33 de type connu, se déplaçant dans l'espace intercuve 13 entre la cuve principale 4 du réacteur renfermant une masse de sodium 7 et la cuve de sécurité 5.

Le chariot 33 de type connu comporte un support 35 sur lequel est fixé un dispositif de mesure 34 qui est déplacé grâce au chariot 33 au voisinage de la paroi 12 de la cuve de sécurité 4 et en particulier au niveau des zones de soudure 20 et 20'.

Le chariot 33 comporte de manière connue des bras articulés sur le support 35 à l'extrémité desquels sont montés des moyens de roulement 37 et 37' venant en contact de roulement avec une des cuves (par exemple la cuve de sécurité 5).

Le chariot 33 comporte également des moyens de roulement tels que 36 venant en contact avec la seconde cuve (ici la cuve principale 4).

La position des bras articulés peut être commandée par des vérins pour maintenir le contact entre les éléments de roulement et les parois entre lesquelles se déplace le chariot 33.

Le chariot 33 est motorisé de manière à assurer ses propres déplacements dans l'espace intercuve 13.

Le dispositif détecteur de photons 34 réalisé de manière semblable au dispositif 14 représenté sur la figure 2 comporte une surface de détection sensible aux photons et un collimateur en plomb ou en alliage lourd comportant des fenêtres de collimation et des canaux de guidage des photons à l'extrémité duquel est placée la surface sensible de détection.

Le chariot 33 est relié à un câble 39 permettant l'alimentation de moyens moteurs de l'ensemble de déplacement et de maintien du chariot 33 et le recueil des mesures provenant de l'ensemble détecteur 34.

Dans le cas d'un réacteur nucléaire refroidi par de l'eau sous pression comportant une cuve remplie d'eau sous pression dans laquelle est plongé le coeur du réacteur, il est également possible d'effectuer un contrôle de la paroi de la cuve en plaçant un détecteur de photons dans des zones de mesure successives au voisinage de la surface externe de la cuve.

Dans ce cas, les mesures seront effectuées pendant le fonctionnement du réacteur nucléaire.

En effet, pendant le fonctionnement du réacteur nucléaire, il se forme par réaction nucléaire, dans l'eau sous pression constituant le fluide de refroidissement remplissant la cuve, de l'azote 16 radioactif qui est un élément émetteur de rayons gamma présentant une activité suffisante pour la mise en oeuvre du procédé de l'invention.

Les modalités de mise en oeuvre du contrôle peuvent être sensiblement identiques à celles qui ont été décrites dans le cas du contrôle de la paroi de la cuve d'un réacteur nucléaire à neutrons rapides.

Le procédé suivant l'invention permet donc d'effectuer de manière simple le contrôle de la paroi d'une capacité renfermant un liquide radioactif, sans avoir à introduire de source de rayonnement ou de détecteur à l'intérieur de la capacité.

En outre, le procédé suivant l'invention permet de déterminer de manière précise, par comparaison, si un défaut est présent dans la paroi, dans une zone de mesure parfaitement définie.

L'invention ne se limite pas aux modes de réalisation qui ont été décrits.

C'est ainsi que l'invention ne se limite pas au contrôle des cuves de réacteur nucléaire à neutrons rapides refroidi par du sodium en utilisant l'élément radioactif Na24 ou le contrôle de cuves de réacteur nucléaire à eau pressurisée en utilisant l'azote 16 comme source de rayons gamma mais peut être appliqué également au contrôle de la paroi de toute capacité renfermant un liquide contenant un élément radioactif réparti sensiblement uniformément dans toute la masse du liquide.

Les moyens de détection et de collimation ou le dispositif de déplacement de ces moyens au voisinage de la paroi peuvent être différents de ceux qui ont été décrits.

L'invention s'applique dans l'industrie nucléaire, pour le contrôle de la paroi de toute cuve ou capacité renfermant un liquide contenant un élément radioactif émetteur de rayons gamma.

## Revendications

1. Procédé de contrôle non destructif d'une paroi (12) d'une capacité (4) contenant un liquide dans lequel au moins un élément radioactif émettant un rayonnement gamma est réparti de manière sensiblement uniforme, consistant à effectuer un comptage de photons au voisinage de la surface externe d'une zone de mesure de la paroi et à comparer le nombre de photons déterminé par comptage à un nombre de référence de photons, pour en déduire si un défaut est présent ou non dans la zone de mesure de la paroi, caractérisé par le fait qu'on effectue le comptage des photons émis par l'élément radioactif réparti de manière uniforme dans le liquide et transmis à travers la zone de mesure de la paroi (12) pouvant présenter des défauts et que le nombre de référence est le nombre de photons émis par l'élément radioactif transmis à travers une zone saine de référence de la paroi (12) ne comportant pas de défauts.

2. Procédé suivant la revendication 1, caractérisé par le fait qu'on mesure l'intervalle de temps nécessaire pour effectuer le comptage d'un nombre de photons prédéterminé émis par l'élément radioactif à travers la zone de mesure et qu'on compare l'intervalle de temps mesuré à un intervalle de temps de référence pendant lequel le nombre prédéterminé de photons est émis à travers une zone de référence de la paroi (12).

3. Procédé suivant la revendication 2, caractérisé par le fait qu'on définit sous la forme d'une relation la variation au cours du temps de l'intervalle de temps de référence, dans le cas d'un élément radioactif émettant un rayonnement gamma ayant une activité décroissante au cours du temps.

4. Procédé suivant la revendication 1, caractérisé par le fait qu'on effectue simultanément un comptage des photons à travers la zone de mesure de la paroi (12) et à travers une zone de référence, pendant un intervalle de temps défini et qu'on compare le nombre de photons émis à travers la zone de mesure et à travers la zone de référence de la paroi (12).

5. Procédé suivant l'une quelconque des revendications 1 à 4, caractérisé par le fait que le liquide contenu dans la capacité (4) est du sodium et que l'élément radioactif émettant un rayonnement gamma réparti de manière sensiblement uniforme dans le liquide est du sodium 24, la capacité (4) étant constituée par la cuve principale (4) d'un réacteur nucléaire à neutrons rapides refroidi par du sodium liquide.

6. Procédé suivant l'une quelconque des revendications 1 à 4 caractérisé par le fait que le liquide contenu dans la capacité est de l'eau sous pression et que l'élément radioactif émettant un rayonnement gamma réparti de manière sensiblement uniforme dans le liquide est de l'azote 16, la capacité étant constituée par la cuve d'un réacteur nucléaire à eau sous pression.

7. Procédé suivant l'une quelconque des revendications 1 à 6, caractérisé par le fait que les rayons gamma émis à travers la paroi (12) de la capacité par l'élément radioactif sont collimatés, par passage à travers un collimateur, avant de parvenir à une surface sensible de détection de photons.

8. Dispositif de contrôle non destructif d'une paroi d'une capacité contenant un liquide dans lequel au moins un élément radioactif émettant un rayonnement gamma est réparti de manière sensiblement uniforme, caractérisé par le fait qu'il comporte un détecteur de photons (15) et un collimateur (16) en métal lourd, le détecteur de photons (15) ayant une surface de détection (15a) des photons disposée à la sortie de canaux (17) traversant le collimateur (16) ainsi qu'un ensemble de mesure et de comparaison (15b) associé au détecteur de photons (15).

9. Dispositif suivant la revendication 8, caractérisé par le fait que le collimateur (16) est constitué par une pièce massive en métal lourd traversée par un ensemble de canaux (17) dont les ouvertures transversales constituant les fenêtres du collimateur ont la forme de fentes parallèles entre elles.

10. Dispositif suivant l'une quelconque des revendications 8 et 9, caractérisé par le fait qu'il comporte de plus un dispositif (33) de déplacement de l'ensemble de mesure constitué par le détecteur (15) et le collimateur (16) dans des positions successives au voisinage de la paroi (12) de la capacité (4).

## Patentansprüche

1. Zerstörungsfreies Kontrollverfahren einer wand (12) einer Hülle (4), die eine Flüssigkeit beinhaltet, in der wenigstens ein gammastrahlendes radioaktives Element enthalten ist, das insgesamt gleichmäßig verteilt ist, welches darin besteht, in der Nähe der äußeren Oberfläche eines Meßbereichs der Wand eine Photonenzählung auszuführen und die durch Zählung bestimmte Photonenanzahl mit einer Referenzphotonenanzahl zu vergleichen, um daraus abzuleiten, ob in dem Meßbereich der Wand ein Fehler vorliegt oder nicht, dadurch gekennzeichnet, daß eine Zählung der Photonen durchgeführt wird, die durch das radioaktive Element emittiert wurden, das gleichmäßig in der Flüssigkeit verteilt ist und die den Meßbereich der Wand (12), welche einen Fehler aufweisen könnte, durchdringen und dadurch, daß die Referenzanzahl die Anzahl der durch das radioaktive Element emittierten Photonen ist, die einen fehlerfreien Referenzbereich der Wand (12), die keinen Fehler aufweist, durchdrungen haben.

2. Verfahren nach Anspruch 1, dadurch gekennzeichnet, daß das Zeitintervall gemessen wird, welches notwendig ist, das Zählen einer vorbestimmten Anzahl von Photonen durchzuführen, die von dem radioaktiven Element durch den Meßbereich emittiert wurde und, daß das gemessene Zeitintervall mit einem Referenzzeitintervall verglichen wird, in welchem eine vorbestimmte Anzahl von Photonen durch einen Referenzbereich der Wand (12) emittiert wurden.

3. Verfahren nach Anspruch 2, dadurch gekennzeichnet, daß in Form einer Relation die Veränderung des zeitlichen Verlaufs des Referenzzeitintervalls in dem Fall eines radioaktiven Elements definiert wird, das Gammastrahlung mit einer im Verlauf der Zeit abnehmenden Aktivität emittiert.

4. Verfahren nach Anspruch 1, dadurch gekennzeichnet, daß gleichzeitig eine Photonenzählung durch den Meßbereich der Wand (12) und durch einen Referenzbereich in einem definierten Zeitintervall ausgeführt wird, und daß die Anzahl der Photonen, die durch den Meßbereich emittiert wurden, mit der Anzahl der Photonen, die durch den Referenzbereich der Wand (12) emittiert wurden, verglichen wird.

5. Verfahren nach einem der vorherigen Ansprüche 1 bis 4, dadurch gekennzeichnet, daß die in der Hülle (4) enthaltene Flüssigkeit Natrium ist, und daß das radioaktive Element, welches Gammastrahlung emittiert und insgesamt gleichmäßig in der Flüssigkeit verteilt ist, Natrium 24 ist, wobei die Hülle (4) aus einem Haupttank (4) eines Kernreaktors mit schnellen Neutronen besteht, der durch flüssiges Natrium gekühlt wird.

6. Verfahren nach einem der vorherigen Ansprüche 1 bis 4 dadurch gekennzeichnet, daß die Flüssigkeit, die in der Hülle enthalten ist, Druckwasser ist, und daß das radioaktive Element, welches Gammastrahlung emittiert und welches insgesamt gleichmäßig in der Flüssigkeit verteilt ist, Stickstoff 16 ist, wobei die Hülle aus einem Tank eines Druckwasserreaktors besteht.

7. Verfahren nach einem der vorherigen Ansprüche 1 bis 6, dadurch gekennzeichnet, daß die durch die Wand (12) der Hülle durch das radioaktive Element emittierten Gammastrahlen durch den Durchgang durch einen Kollimator kollimiert werden, bevor sie eine Fläche erreichen, die empfindlich für die Detektion von Photonen ist.

8. Vorrichtung zur zerstörungsfreien Prüfung einer Wand eines mit einer radioaktiven Flüssigkeit gefüllten Belälters, in welchem wenigstens ein gammastrahlendes radioaktives Element enthalten ist, das insgesamt gleichmäßig verteilt ist, dadurch gekennzeichnet, daß sie einen Photonendetektor (15) und einen Kollimator (16) aus schwerem Metall aufweist, wobei der Photonendetektor (15) eine Detektorfläche (15a) der Photonen aufweist, die am Ausgang der Kanäle (17) angeordnet sind, die den Kollimator (16) durchziehen, ebenso wie ein Meß- und Vergleichsaufbau (15b), der an den Photonendetektor (15) angeschlossen ist.

9. Vorrichtung nach Anspruch 8, dadurch gekennzeichnet, daß der Kollimator (16) aus einem massiven schweren Metallstück besteht, der von mehreren Kanälen (17) durchzogen wird, deren transversale Öffnungen die Spalte des Kollimators darstellen und untereinander die Form von parallelen Spalten aufweisen.

10. Vorrichtung nach einem der vorherigen Ansprüche 8 und 9, dadurch gekennzeichnet, daß sie darüber hinaus eine Fortbewegungsvorrichtung (33) für den Meßaufbau, bestehend aus dem Detektor (15) und dem Kollimator (16) in aufeinanderfolgenden Positionen in der Nähe der Wand (12) der Hülle (4) aufweist.

## Claims

1. Method for non-destructive examination of a wall (12) of a tank (4) containing a liquid in which at least one radioactive element emitting gamma radiation is distributed substantially uniformly, consisting in photons in the vicinity of the external surface of a measurement zone of the wall being counted and in the number of photons determined by counting being compared with a reference number of photons, in order to deduce therefrom whether or not a defect is present in the measurement zone of the wall, characterised in that the count is made of the photons emitted by the radioactive element uniformly distributed in the liquid and transmitted through the measurement zone of the wall (12) which may have defects and in that the reference number is the number of photons emitted by the radioactive element transmitted through a sound reference zone of the wall (12) which does not contain any defects.

2. Method according to Claim 1, characterised in that the time interval necessary for counting a predetermined number of photons emitted by the radioactive element through the measurement zone is measured, and in that the time interval measured is compared with a reference time interval during which the predetermined number of photons is emitted through a reference zone of the wall (12).

3. Method according to Claim 2, characterised in that the variation with time of the reference time interval is defined in the form of a relationship in the case of a radioactive element emitting gamma radiation which has an activity which decreases with time.

4. Method according to Claim 1, characterised in that a count is simultaneously made of the photons through the measurement zone of the wall (12) and through a reference zone, during a defined time interval and in that the number of photons emitted through the measurement zone and through the reference zone of the wall (12) is compared.

5. Method according to any one of Claims 1 to 4, characterised in that the liquid contained in the tank (4) is sodium and in that the radioactive element emitting gamma radiation distributed substantially uniformly in the liquid is sodium-24, the tank (4) consisting of the main vessel (4) of a fast-neutron nuclear reactor cooled with liquid sodium.

6. Method according to any one of Claims 1 to 4 characterised in that the liquid contained in the tank is pressurised water and in that the radioactive element emitting gamma radiation distributed substantially uniformly in the liquid is nitrogen-16, the tank consisting of the vessel of a pressurised-water nuclear reactor.

7. Method according to any one of Claims 1 to 6, characterised in that the gamma rays emitted through the wall (12) of the tank by the radioactive element are collimated by passage through a collimator, before reaching a sensitive photon-detection surface.

8. Device for non-destructive examination of a wall of a tank containing a liquid in which at least one radioactive element emitting gamma radiation is distributed substantially uniformly, characterised in that it comprises a photon detector (15) and a collimator (16) made of heavy metal, the photon detector (15) having a detection surface (15a) for the photons disposed at the exit of channels (17) passing through the collimator (16) as well as a measurement and comparison assembly (15b) associated with the photon detector (15).

9. Device according to Claim 8, characterised in that the collimator (16) consists of a large piece made of heavy metal passed through by a set of channels (17) whose transverse openings constituting the windows of the collimator have the shape of mutually parallel slits.

10. Device according to either of Claims 8 and 9, characterised in that it furthermore comprises a device (33) for moving the measurement assembly consisting of the detector (15) and the collimator (16) into successive positions in the vicinity of the wall (12) of the tank (4).
